# EUROPEAN PATENT APPLICATION

(11) **EP 4 131 798 A1**
(43) Date of publication of application: **08.02.2023**
(21) Application number: 22188493.5
(22) Date of filing: 03.08.2022
(51) Int. Cl.: H04B 7/06, H04L 69/24, H04W 12/03

(54) **METHODS FOR REPORTING ENCRYPTION CAPABILITY**

(30) Priority: 05.08.2021 US 202163229786 P; 21.01.2022 US 202217581641
(71) Applicant: Samsung Electronics Co., Ltd., Gyeonggi-do, 16677 (KR)
(72) Inventor: LEE, Wookbong, San Jose, CA, 95134 (US); RANGANATH, Ashok, San Jose, CA, 95134 (US); IBRAHIM, Mostafa, San Jose, CA, 95134 (US); VEERASHETTY, Pavankumar, San Jose, CA, 95134 (US); GIDVANI, Ravi, San Jose, CA, 95134 (US); DUAN, Ruchen, San Jose, CA, 95134 (US); KARMUCHI, Shailender, San Jose, CA, 95134 (US); KANDALA, Srinivas, San Jose, CA, 95134 (US)
(74) Representative: Kuhnen & Wacker Patent- und Rechtsanwaltsbüro PartG mbB

(57) **Abstract**

A method according to some embodiments include reporting (402), by a beamformee, an encryption capability indicator to a beamformer, wherein the encryption capability indicator is indicative of a capability of the beamformee to encrypt a feedback frame. The method may also include receiving (404), by the beamformee from the beamformer, an announcement frame in response to the beamformer receiving an indication that the beamformee is capable of encrypting the feedback frame, and then sending (406), by the beamformee, an encrypted feedback frame.

## Description

### FIELD

The present application generally relates to protecting a feedback frame on a beamforming Wi-Fi signal, and more particularly to methods for reporting encryption capability.

### BACKGROUND

Wi-Fi sensing is a concept in which existing Wi-Fi signals are used in a radar-like manner to determine, detect, and/or sense changes in the environment. These changes can include, for example, movements, motions, and/or gestures by person or an object, and through Wi-Fi sensing, one may determine precisely what a person is doing, how that person is moving, what kind of gestures that person is making, etc. Consequently, Wi-Fi sensing technology may be exploited, for example, by the "bad guys" to steal passwords and personal identification numbers (PINs) from unsuspecting victims by determining the victim's hand gesture as they enter their PIN on a keyboard. Therefore, techniques for encrypting such signals is desirable.

### SUMMARY

According to some embodiments, a method is described, including reporting, by a beamformee, an encryption capability indicator to a beamformer, wherein the encryption capability indicator is indicative of a capability of the beamformee to encrypt a feedback frame, receiving, by the beamformee from the beamformer, an announcement frame in response to the beamformer receiving an indication that the beamformee is capable of encrypting the feedback frame, and sending, by the beamformee, an encrypted feedback frame.

The announcement frame may include instructions for the beamformee to encrypt the feedback frame.

The encryption capability indicator may include a first state indicative of the beamformee being incapable of encrypting the feedback frame, a second state indicative of the beamformee being incapable of encrypting a non-TB sounding feedback frame and being capable of encrypting a TB sounding feedback frame, and a third state indicative of the beamformee being capable of encrypting the non-TB sounding feedback and the TB sounding feedback.

The encryption capability indicator may include a 2-bit indicator, and the first state is indicated by a 00 of the 2-bit indicator, the second state is indicated by a 01 of the 2-bit indicator, and the third state is indicated by a 10 of the 2-bit indicator.

The encryption capability indicator may include a first state indicative of the beamformee being incapable of encrypting the feedback frame, and a second state indicative of the beamformee being capable of encrypting the feedback frame.

The encryption capability indicator may include a 1-bit indicator, and the first state is indicated by a 0 of the 1-bit indicator and the second state is indicated by a 1 of the 1-bit indicator.

The encryption capability indicator may include a first state indicative of the beamformee being incapable of encrypting the feedback frame, a second state indicative of the beamformee being capable of encrypting up to a 996-tone resource unit (RU), a third state indicative of the beamformee being capable of encrypting up to a 2x996-tone RU, and a fourth state indicative of the beamformee being capable of encrypting up to a 4x996-tone RU.

The 996-tone RU corresponds to a bandwidth of 80 MHz, the 2x996-tone RU corresponds to a bandwidth of 160 MHz, and the 4x996-tone RU corresponds to a bandwidth of 320 MHz.

The method may further include receiving, by the beamformee from the beamformer a sounding frame, in response to receiving the announcement frame, wherein the feedback frame includes a compressed beamforming channel quality indicator (CQI).

The beamformee and the beamformer may be communicatively coupled over an extremely high throughput (EHT) Wi-Fi signal, and the encryption capability indicator is an EHT physical layer (PHY) capabilities indicator.

According to some embodiments, a method is described, including reporting, by a plurality of beamformees, an encryption capability indicator for each of the plurality of beamformees to a beamformer, wherein the encryption capability indicator corresponding to each of the beamformees is indicative of a capability of a respective beamformee of the plurality of beamformees to encrypt a feedback frame, receiving, by each beamformee from the beamformer, an announcement frame in response to the beamformer receiving an indication that at least one of the plurality of beamformees are capable of encrypting the feedback frame, and sending, by the beamformee capable of encrypting the feedback frame, the encrypted feedback frame.

The announcement frame may include instructions for the beamformee capable of encrypting the feedback frame to encrypt the feedback frame.

Each of the respective encryption capability indicators may include a first state indicative of the respective beamformee being incapable of encrypting the respective feedback frame, a second state indicative of the respective beamformee being incapable of encrypting a respective non-TB sounding feedback frame and being capable of encrypting a respective TB sounding feedback frame, and a third state indicative of the respective beamformee being capable of encrypting the respective non-TB sounding feedback and the respective TB sounding feedback.

Each of the respective encryption capability indicators may include a 2-bit indicator, and the first state is indicated by a 00 of the 2-bit indicator, the second state is indicated by a 01 of the 2-bit indicator, and the third state is indicated by a 10 of the 2-bit indicator.

Each of the respective encryption capability indicators may include a first state indicative of the respective beamformee being incapable of encrypting the feedback frame, and a second state indicative of the respective beamformee being capable of encrypting the feedback frame.

Each of the respective encryption capability indicators may include a 1-bit indicator, and the first state is indicated by a 0 of the 1-bit indicator and the second state is indicated by a 1 of the 1-bit indicator.

Each of the respective encryption capability indicators may include a first state indicative of the respective beamformee being incapable of encrypting the feedback frame, a second state indicative of the respective beamformee being capable of encrypting up to a 996-tone resource unit (RU), a third state indicative of the respective beamformee being capable of encrypting up to a 2x996-tone RU, and a fourth state indicative of the respective beamformee being capable of encrypting up to a 4x996-tone RU.

The 996-tone RU corresponds to a bandwidth of 80 MHz, the 2x996-tone RU corresponds to a bandwidth of 160 MHz, and the 4x996-tone RU corresponds to a bandwidth of 320 MHz.

Each of the respective feedback frames may include a respective compressed beamforming channel quality indicator (CQI).

The method may further include receiving, by each beamformee from the beamformer a sounding frame, in response to receiving the announcement frame, wherein the respective beamformee and the beamformer are communicatively coupled over an extremely high throughput (EHT) Wi-Fi signal, and the encryption capability indicator is an EHT physical layer (PHY) capabilities indicator.

The scope of the invention is defined by the claims, which are incorporated into this section by reference. A more complete understanding of embodiments of the invention will be afforded to those skilled in the art, as well as a realization of additional advantages thereof, by a consideration of the following detailed description of one or more embodiments. Reference will be made to the appended sheets of drawings that will first be described briefly.

### BRIEF DESCRIPTION OF THE DRAWINGS

FIGS. 1A-1B are illustrations of Wi-Fi networks where Wi-Fi sensing may be performed, according to some embodiments of the present disclosure.
FIG. 2 is an illustration of an example EHT non-trigger based (TB) sounding process, according to some embodiments of the present disclosure.
FIG. 3 is an illustration of an example EHT TB sounding process, according to some embodiments of the present disclosure.
FIG. 4 is a flow chart of an example method for associating a beamformee and a beamformer, including reporting encryption capability, according to some embodiments of the present disclosure.
FIG. 5 is a flow chart of another example method for associating a beamformee and a beamformer, including reporting encryption capability, according to some embodiments of the present disclosure.

Embodiments of the present disclosure and their advantages are best understood by referring to the detailed description that follows. Unless otherwise noted, like reference numerals denote like elements throughout the attached drawings and the written description, and thus, descriptions thereof will not be repeated. In the drawings, the relative sizes of elements, layers, and regions may be exaggerated for clarity.

### DETAILED DESCRIPTION

Aspects of some embodiments of the present disclosure and methods of accomplishing the same may be understood more readily by reference to the detailed description of embodiments and the accompanying drawings. Hereinafter, embodiments will be described in more detail with reference to the accompanying drawings. The described embodiments, however, may be embodied in various different forms, and should not be construed as being limited to only the illustrated embodiments herein. Rather, these embodiments are provided as examples so that this disclosure will be thorough and complete, and will fully convey the aspects of the present disclosure to those skilled in the art. Accordingly, processes, elements, and techniques that are not necessary to those having ordinary skill in the art for a complete understanding of the aspects of the present disclosure may not be described.

Wi-Fi technology is used by many personnel in their day-to-day lives. Examples of some common devices that utilize Wi-Fi technology include laptop computers, smartphones, and tablet devices, among others. A user of these devices may operate them in a private environment like in their home, school, or work, or in public places like restaurants, libraries, airports, coffee shops, etc. When such devices are utilized in public places, the users are more vulnerable to intruders that may try to exploit the Wi-Fi signals to steal their private data. As a result, robust technologies have been implemented to prevent such exploitation by encrypting the Wi-Fi signals that carry information.

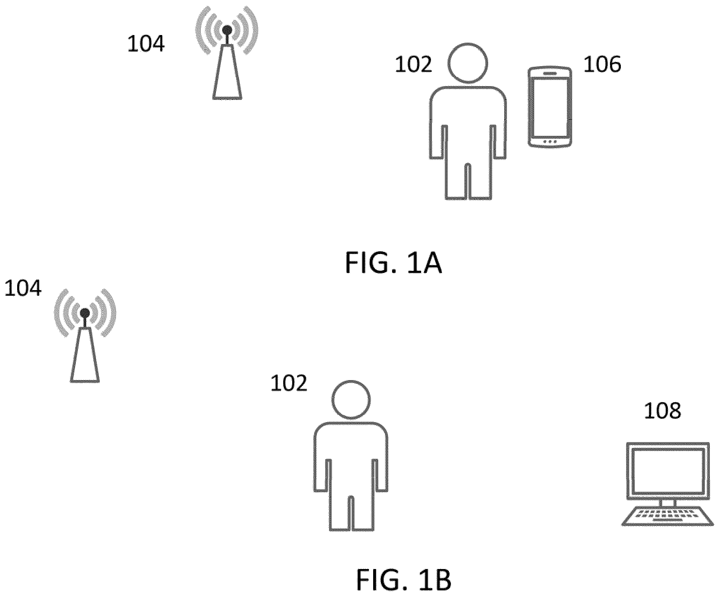

While conventional Wi-Fi technologies were based on the Wi-Fi signals that are emitted omnidirectionally, more recent Wi-Fi technologies perform beamforming to focus the Wi-Fi signals into a narrower beam toward specific receiving devices (e.g., client devices). Accordingly, a stronger signal may be provided in desired areas (e.g., in the focused area) and a less strong signal may be provided where the signal is not desired or not needed. For example, FIG. 1A illustrates a person 102 holding a handheld device such as a smartphone 106 that is connected to a Wi-Fi signal coming from an access point 104. If the access point 104 is a beamforming access point, then the Wi-Fi signal from the access point 104 has a focused beam in the direction of the smartphone 106. The beamforming may be performed by a compressed beamforming channel quality indicator (CQI) frame Action field frame where the beamformer (i.e., the access point 104) sends a signal to the beamformee (i.e., the smartphone 106) and the beamformee sends back a report known as the compressed beamforming CQI feedback frame. Existing technical standards in accordance with IEEE 802.11n, 11ac, 11ax, and 11be do not include any encryption of the feedback frame. Therefore, hackers may be able to easily exploit the unencrypted feedback frame. Consequently, with Wi-Fi sensing technologies, intruders (e.g., hackers) may be able to determine the person's 102 gestures on the smartphone 106, for example when the user enters his/her password or PIN into the smartphone 106, the intruder can figure out what password or PIN the user is entering by determining how his/her fingers moved on the surface of the smartphone 106. Thus, there is a growing desire for encryption of the feedback frames.

According to another example as illustrated in FIG. 1B, a person 102 may be standing in a room where a client device such as a computer terminal 108 is connected to an access point 104 via a Wi-Fi signal. Differently from the example in FIG. 1A, here, the person 102 is not necessarily using the computer terminal 108 but is merely in the vicinity (e.g., in the same room) of the computer terminal 108. If the access point 104 is a beamforming access point, then the Wi-Fi signal from the access point 104 may have a focused beam in the direction of the computer 108. In this case, even though the person 102 is not using the computer terminal, by simply being in the same room (e.g., along the pathway of the beamform from the access point 104), the person's 102 bodily movements or gestures may be detected and determined by an intruder (e.g., a hacker) by exploiting the unencrypted feedback frames through Wi-Fi sensing technologies. Consequently, a hacker may be able to figure out how or where a person is moving inside of a room, thereby invoking privacy concerns. Thus, it is desirable to encrypt the feedback frames to reduce or prevent hackers from performing unauthorized Wi-Fi sensing on an unsuspecting person. However, not all beamformees are capable of encrypting the feedback frames. Therefore, embodiments of the present disclosure describes techniques for reporting the capabilities of a beamformee to a beamformer so that the beamformer can determine whether or not to incorporate encryption in the beamforming signals.

In some embodiments, when a beamformee desires to join a beamformer's network, the beamformee scans for a signal (e.g., Wi-Fi signal) of the beamformer. For example, the beamformer may be an access point and the beamformee may be a client device. Thus, when the beamformee wants to join the network, e.g., the beamformer's network, the beamformee searches for the beamformer's network by scanning, and then sends an association request to associate the beamformee with the beamformer. If certain criteria are met, then the beamformee may join the beamformer's network. This process may be referred to as an association process and may be performed according to various techniques specified in, for example, IEEE 802.11xx standards.

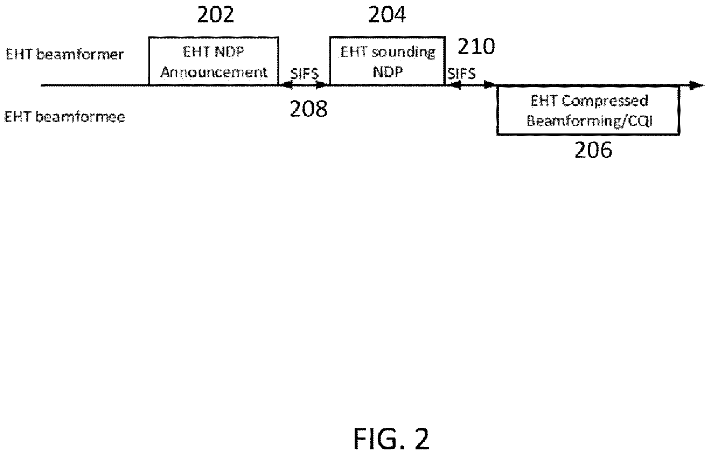

According to some embodiments, after the association process is performed, the beamformee and the beamformer may perform a sounding process to set up beamforming (as opposed to conventional omni-directional signals) between the beamformer and the beamformee. FIG. 2 is an example illustration of an EHT non-trigger based (TB) sounding process. An EHT non-TB sounding sequence is initiated by an EHT beamformer with an individually addressed EHT null data packet (NDP) announcement frame. Here, the beamformer may be, for example, an access point and the beamformee may be a client device. In other embodiments, the beamformer may be a client device and the beamformee may be an access point. Accordingly, in some embodiments, an EHT NDP announcement frame 202 includes exactly one station (STA) information field corresponding to the one beamformee. The announcement frame 202 is followed by a first short interface spacing (SIFS) 208, and then followed by an EHT sounding frame NDP 204. Here, the EHT sounding frame NDP 204 may be a reference signal and a second SIFS 210 may follow the EHT sounding frame NDP 204. Finally, the EHT beamformee responds after the second SIFS 210 with a feedback frame 206. In some embodiments, the feedback frame 206 may be an EHT compressed beamforming CQI frame. Accordingly, during the described EHT non-TB sounding process, there may be no time to encrypt the feedback frame 206 as can been seen in FIG. 2, because the time period of the second SIFS 210 could be too short. Yet in some embodiments, encryption of the feedback frame 206 may still be possible in this EHT non-TB sounding process. Therefore, a technique to report whether or not encryption is possible is desired.

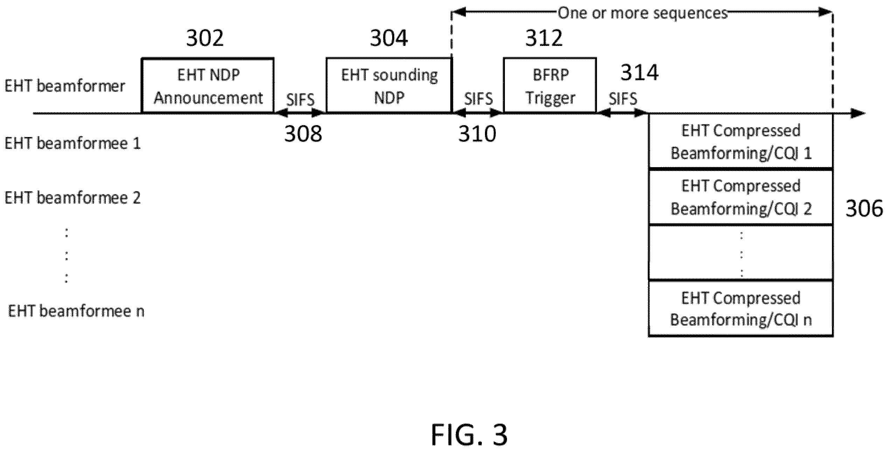

FIG. 3 is an example illustration of an EHT TB sounding process. Similar to the EHT non-TB sounding process with reference to FIG. 2, the EHT TB sounding sequence is also initiated by a beamformer but with a broadcast addressed EHT NDP announcement frame that includes more than one STA information field. For example, one beamformer may communicate with multiple beamformees. Thus, in this case, the beamformer is an access point and the beamformee is a client device. The EHT NDP announcement frame 302 is followed by a first SIFS 308, and then followed by an EHT sounding frame NDP 304. Here, the EHT sounding frame NDP 304 may be a reference signal and a second SIFS 310 may follow the EHT sounding frame NDP 304. In some embodiments, the second SIFS 310 is followed by a beamforming report poll (BFRP) trigger 312, which directs the EHT sounding frame NDP 304. In some embodiments, the BFRP trigger 312 may be followed by a third SIFS 314 and then the EHT beamformees may respond after the BFRP trigger 312 with feedback frames 306. In some embodiments, the feedback frames 306 may be EHT compressed beamforming CQI frames. Accordingly, during the described EHT TB sounding process, there is more time (at least, relatively to the non-TB sounding process) to encrypt the feedback frames 306 because of the BFRP trigger 312 time period.

Therefore, as illustrated in the examples of FIG. 2 and FIG. 3, some beamformees may be capable of encrypting the feedback frames while some beamformees may not be capable of encrypting the feedback frames. A new technical standard may be developed to implement techniques for reporting capabilities.

According to some embodiments of the present disclosure, encryption capabilities of the beamformee may be reported to the beamformer during the association process, for example, after the beamformee finds (and joins) the beamformer's network but before performing the above described sounding processes (e.g., EHT non-TB sounding process and/or EHT TB sounding process).

According to some embodiments of the present disclosure, during the association process, for example following the process for searching, requesting, and joining the beamformer's network, the beamformee and the beamformer may exchange capability information. That is, the beamformee may report to the beamformer the capabilities of the beamformee, and the beamformer may report to the beamformee the capabilities of the beamformer. In some embodiments, one or more of the capabilities that are reported during this exchange may include the encryption capabilities of the beamformee.

In other words, because not all beamformees (e.g., client devices) are capable of encrypting feedback frames, the beamformee may report whether or not the beamformee is able to encrypt feedback frames to the beamformer. Accordingly, if the beamformee is able to encrypt the feedback frames, then the beamformer will recognize that this particular beamformee is capable of encrypting the feedback frames and will prepare to receive encrypted feedback frames. Accordingly, the beamformer may prepare to decrypt the feedback frames that it will receive encrypted.

In some embodiments, if the beamformee reports that the beamformee is unable or incapable of encrypting feedback frames, then the beamformer may accept unencrypted feedback frames or may not accept unencrypted feedback frames. In other words, whether or not the beamformer accepts unencrypted feedback frames from the beamformee may depend on the policy that is set for the beamformer, e.g., by an access policy. Such policy may be an information technology (IT) policy that is determined by the user based on the degree of security desired in this network. Thus, if the policy allows for accepting unencrypted feedback frames, then the beamformer will accept the unencrypted feedback frames. On the other hand, if the policy does not allow for accepting unencrypted feedback frames, then the beamformer will not accept unencrypted feedback frames. For example, the beamformer may reject the beamformee from joining the network so that no further exchange of information may occur between the beamformee and the beamformer.

Turning back to the embodiments of the present disclosure, the encryption capability reporting technique will now be described in more detail. According to some embodiments, an EHT physical layer (PHY) capabilities information field during the capabilities information exchange may include a field that represents an encryption capability of the beamformee. According to a first example, a 1-bit indicator may be implemented where a 0 bit indicates that the beamformee cannot encrypt and a 1 bit indicates that the beamformee can encrypt.

In some embodiments, the EHT PHY capabilities information field may include a 2-bit indicator. Accordingly, a 2-bit indicator provides more options (e.g., up to four choices). Thus, a 00 bit indicates that the beamformee cannot encrypt, a 01 bit indicates that the beamformee for a non-TB sounding cannot encrypt but a beamformee for a TB founding can encrypt, and a 10 bit indicates that the beamformee for both non-TB sounding and TB sounding may be encrypted. In some embodiments, a 11 bit may not be used or may be reserved for later use. It should be noted that this combination of bits is merely one example and that other combinations of bits may be utilized to achieve similar encryption capabilities information exchange. In other words, some form of another 1- or 2-bit indicator may be included during the association process, for example, during a capabilities exchange to indicate the encryption capability of the beamformee.

In some embodiments, the EHT PHY capabilities information field may include encryption capabilities based for different bandwidth or different resource unit (RU) sizes of the beamformee. For example, the beamformee may be able to encrypt feedback frames up to certain bandwidth sizes or RU sizes. According to one example, the beamformee may be capable of encrypting in cases where the feedback frame is up to 80 MHz or 996-tone RU but not capable of encrypting in cases where the feedback frame is larger than 80 MHz or 996-tone RU. In other examples, the beamformee may be capable of encrypting in cases where the feedback frame is up to 160 MHz or 2x996-tone RU. Yet in other examples, the beamformee may be capable of encrypting in cases where the feedback frame is up to 320 MHz or 4x996-tone RU. Accordingly, the EHT PHY encryption capabilities information field may be configured to report encryption capabilities of the beamformee based on different bandwidth and/or different RU sizes.

According to some embodiments, a 2-bit indicator may be utilized to report, for example, four choices, wherein a 00 indicates that the beamformee cannot encrypt, a 01 indicates that the beamformee can encrypt up to 996-tone RU or 80 MHz, a 10 indicates that the beamformee can encrypt up to 2x996-tone RU or 160 MHz, and a 11 indicates that the beamformee can encrypt up to 4x996-tone RU or 320 MHz. Again, as previously noted, this combination of bits is merely another example and that other combinations of bits may be utilized to achieve similar encryption capabilities information exchange. In other words, some form of another 1- or 2-bit indicator may be included during the association process, for example, during a capabilities exchange to indicate the encryption capability of the beamformee.

In some embodiments, the EHT PHY capabilities information field may be applicable for just the EHT non-TB sounding processes because depending on the circumstances, there may or may not be enough time to encrypt the feedback frames, whereas all EHT TB sounding cases may assumed to be all capable of encryption.

Accordingly, various techniques for reporting the encryption capabilities of a beamformee may be provided to the beamformer so that the beamformer can determine whether or not to allow this beamformee to join and remain on the network. In some embodiments, if the beamformer allows the beamformee to join the network, then the beamformer may proceed to sending the EHT NDP announcement frame 202, 302 as illustrated in FIGS. 2-3. Here, the NDP announcement frame 202, 302 and the sounding NDP frame 204, 304 may now include information whether to encrypt the feedback frame or not based on the encryption capabilities determination in the previous stages. In other words, the beamformer has learned, based on the encryption capabilities information exchange that the beamformee is capable of encryption or not. Therefore, this information may now be included in the NDP announcement frame that the beamformer sends to the beamformee. Next, the EHT sounding NDP frame 204, 304, which may also include information whether or not to encrypt the feedback frame, may be sent to the beamformee, and eventually, the beamformee may send the encrypted feedback frames 206, 306 to the beamformer if it was determined that encryption was capable.

In some embodiments, the feedback frames may be encrypted using known encryption techniques such as, for example protected action frame, etc. The details of the encryption is beyond the scope of the present disclosure and will not be described in detail here. Furthermore, it should be noted that the sounding schemes described herein with reference to EHT non-TB sounding and EHT TB sounding are merely examples, and other sounding schemes may instead be used.

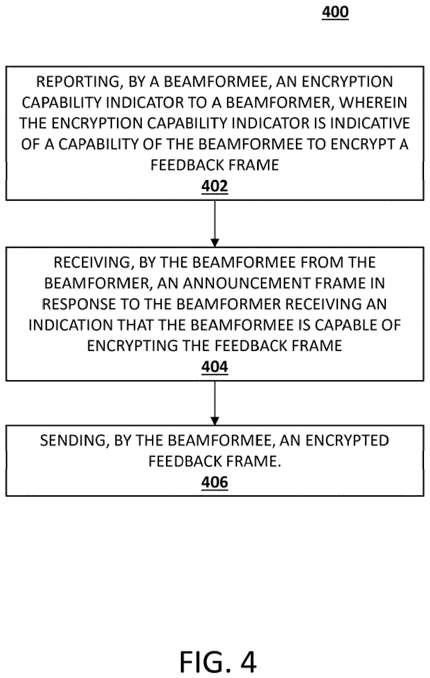

FIG. 4 is a flow chart of an example method for associating a beamformee and a beamformer, including reporting encryption capability, according to some embodiments of the present disclosure. Accordingly, after a beamformee finds a beamformer's network to join, the beamformee may initiate a capabilities information exchange with the beamformer. Thus, the beamformee may report an encryption capability indicator of the beamformee to a beamformer. In some embodiments, the encryption capability indicator may be indicative of a capability of the beamformee to encrypt a feedback frame, for example, so that an unsuspecting user does not get exploited by an intruder (402). In other words, the beamformer may be able to determine whether or not the beamformee has the capability to encrypt feedback frame based on the information that is provided in the encryption capability indicator. After the association process where the encryption capability of the beamformee is reported, a sounding process may be performed where the beamformee may receive from the beamformer, an announcement frame in response to the beamformer receiving an indication that the beamformee is capable of encrypting the feedback frame (404). In some embodiments, the announcement frame may include information or instructions to the beamformee that the beamformer acknowledges the encryption capability of the beamformee and that the beamformee should send the feedback frames encrypted. Finally, in response to receiving the announcement frame from the beamformer, the beamformee may send an encrypted feedback frame to the beamformer (406).

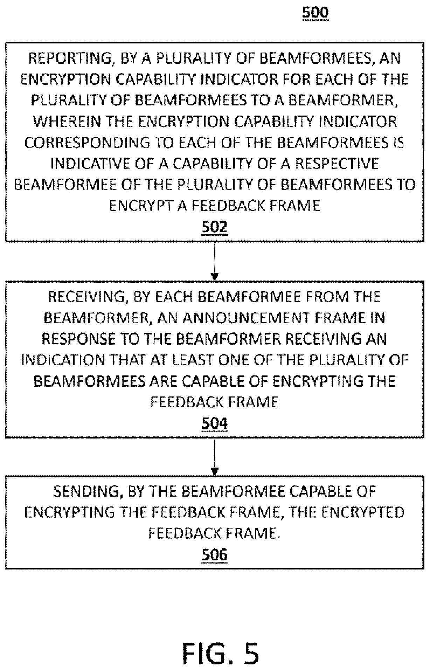

FIG. 5 is a flow chart of another example method for associating a beamforemee and a beamformer, including reporting encryption capability, according to some embodiments of the present disclosure. Accordingly, after a beamformee finds a beamformer's network to join, the beamformee may initiate a capabilities information exchange with the beamformer. In some embodiments, such as in the case of an EHT TB sounding process, there may be a plurality of beamformees all desiring to join the network of one beamformer. For example, the beamformer may be an access point and the multiple beamformees may each be a different client device. Accordingly, each client device may want to join the same access point shared by the other client devices. Thus, the plurality of beamformees may report an encryption capability indicator for each beamformee to a beamformer. In some embodiments, the encryption capability indicator may be indicative of a capability of the beamformee to encrypt a feedback frame, for example, so that an unsuspecting user does not get exploited by an intruder (502). In other words, the beamformer may be able to determine whether or not the beamformee has the capability to encrypt feedback frame based on the information that is provided in the encryption capability indicator. After the association process where the encryption capability of the beamformee is reported, a sounding process may be performed where each beamformee may receive from the beamformer, an announcement frame in response to the beamformer receiving an indication that at least one of the plurality of beamformees are capable of encrypting the feedback frame (504). In some embodiments, some of the beamformees may not be capable of encrypting the feedback frame and some of the beamformees may be capable of encrypting the feedback frame. In other embodiments, all of the beamformees may be capable of encrypting the feedback frame. In some embodiments, the announcement frame may include information or instructions to certain beamformees that the beamformer acknowledges the encryption capability of the beamformee and that the particular beamformee should send the feedback frames encrypted. Finally, in response to receiving the announcement frame from the beamformer, the beamformee (or each beamformee) that is capable of encrypting the feedback frame may send an encrypted feedback frame to the beamformer (506).

Accordingly, various techniques for reporting the encryption capabilities of a beamformee may be provided to the beamformer so that the beamformer can expect whether the feedback frame is going to arrive encrypted. If the feedback frames are encrypted, then it may be more difficult for a third party to hack the feedback frames to exploit information through Wi-Fi sensing.

Unless otherwise noted, like reference numerals, characters, or combinations thereof denote like elements throughout the attached drawings and the written description, and thus, descriptions thereof will not be repeated. Further, parts that are not related to, or that are irrelevant to, the description of the embodiments might not be shown to make the description clear.

In the drawings, the relative sizes of elements, layers, and regions may be exaggerated for clarity. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

In the detailed description, for the purposes of explanation, numerous specific details are set forth to provide a thorough understanding of various embodiments. It is apparent, however, that various embodiments may be practiced without these specific details or with one or more equivalent arrangements. In other instances, well-known structures and devices are shown in block diagram form in order to avoid unnecessarily obscuring various embodiments.

It will be understood that when an element, layer, region, or component is referred to as being "formed on," "on," "connected to," or "coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or intervening layers, regions, or components may be present. However, "directly connected/directly coupled" refers to one component directly connecting or coupling another component without an intermediate component. Meanwhile, other expressions describing relationships between components such as "between," "immediately between" or "adjacent to" and "directly adjacent to" may be construed similarly. In addition, it will also be understood that when an element or layer is referred to as being "between" two elements or layers, it can be the only element or layer between the two elements or layers, or one or more intervening elements or layers may also be present.

For the purposes of this disclosure, expressions such as "at least one of," when preceding a list of elements, modify the entire list of elements and do not modify the individual elements of the list. For example, "at least one of X, Y, and Z," "at least one of X, Y, or Z," and "at least one selected from the group consisting of X, Y, and Z" may be construed as X only, Y only, Z only, any combination of two or more of X, Y, and Z, such as, for instance, XYZ, XYY, YZ, and ZZ, or any variation thereof. Similarly, the expression such as "at least one of A and B" may include A, B, or A and B. As used herein, the term "and/or" includes any and all combinations of one or more of the associated listed items. For example, the expression such as "A and/or B" may include A, B, or A and B.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure. The description of an element as a "first" element may not require or imply the presence of a second element or other elements. The terms "first", "second", etc. may also be used herein to differentiate different categories or sets of elements. For conciseness, the terms "first", "second", etc. may represent "first-category (or first-set)", "second-category (or second-set)", etc., respectively.

The terminology used herein is for the purpose of describing particular embodiments only and is not intended to be limiting of the present disclosure. As used herein, the singular forms "a" and "an" are intended to include the plural forms as well, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

As used herein, the term "substantially," "about," "approximately," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

When one or more embodiments may be implemented differently, a specific process order may be performed differently from the described order. For example, two consecutively described processes may be performed substantially at the same time or performed in an order opposite to the described order.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

The electronic or electric devices and/or any other relevant devices or components according to embodiments of the present disclosure described herein may be implemented utilizing any suitable hardware, firmware (e.g., an application-specific integrated circuit), software, or a combination of software, firmware, and hardware, to process data or digital signals. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Circuit hardware may include, for example, application specific integrated circuits (ASICs), general purpose or special purpose central processing units (CPUs) that is configured to execute instructions stored in a non-transitory storage medium, digital signal processors (DSPs), graphics processing units (GPUs), and programmable logic devices such as field programmable gate arrays (FPGAs).

Further, the various components of these devices may be a process or thread, running on one or more processors, in one or more computing devices, executing computer program instructions and interacting with other system components for performing the various functionalities described herein. The computer program instructions are stored in a memory that may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

## Claims

1. A method, comprising:
reporting (402), by a beamformee, an encryption capability indicator to a beamformer (104), wherein the encryption capability indicator is indicative of a capability of the beamformee to encrypt a feedback frame (206; 306);
receiving (404), by the beamformee from the beamformer (104), an announcement frame (202; 302) in response to the beamformer (104) receiving an indication that the beamformee is capable of encrypting the feedback frame (206; 306); and
sending (406), by the beamformee, an encrypted feedback frame (206; 306).

2. The method of claim 1, wherein the announcement frame (202; 302) comprises instructions for the beamformee to encrypt the feedback frame (206; 306).

3. The method of claim 1 or 2, wherein the encryption capability indicator comprises:
a first state indicative of the beamformee being incapable of encrypting the feedback frame (206; 306),
a second state indicative of the beamformee being incapable of encrypting a non-TB sounding feedback frame and being capable of encrypting a TB sounding feedback frame, and
a third state indicative of the beamformee being capable of encrypting the non-TB sounding feedback and the TB sounding feedback.

4. The method of claim 1 or 2, wherein the encryption capability indicator comprises:
a first state indicative of the beamformee being incapable of encrypting the feedback frame (206; 306), and
a second state indicative of the beamformee being capable of encrypting the feedback frame (206; 306).

5. The method of claim 1 or 2, wherein the encryption capability indicator comprises:
a first state indicative of the beamformee being incapable of encrypting the feedback frame (206; 306),
a second state indicative of the beamformee being capable of encrypting up to a 996-tone resource unit, RU,
a third state indicative of the beamformee being capable of encrypting up to a 2x996-tone RU, and
a fourth state indicative of the beamformee being capable of encrypting up to a 4x996-tone RU.

6. The method of any one of claims 1 to 5, further comprising receiving, by the beamformee from the beamformer (104) a sounding frame, in response to receiving the announcement frame (202; 302), wherein the feedback frame (206; 306) comprises a compressed beamforming channel quality indicator, CQI.

7. The method of any one of claims 1 to 6, wherein the beamformee and the beamformer (104) are communicatively coupled over an extremely high throughput, EHT, Wi-Fi signal, and the encryption capability indicator is an EHT physical layer, PHY, capabilities indicator.

8. The method according to claim 1 or 2, comprising:
reporting (502), by a plurality of beamformees, an encryption capability indicator for each of the plurality of beamformees to the beamformer (104), wherein the encryption capability indicator corresponding to each of the beamformees is indicative of a capability of a respective beamformee of the plurality of beamformees to encrypt a feedback frame (306);
receiving (504), by each beamformee from the beamformer (104), an announcement frame (302) in response to the beamformer (104) receiving an indication that at least one of the plurality of beamformees are capable of encrypting the feedback frame (306); and
sending (506), by the beamformee capable of encrypting the feedback frame (306), the encrypted feedback frame (306).

9. The method of claim 8, wherein each of the respective encryption capability indicators comprise:
a first state indicative of the respective beamformee being incapable of encrypting the respective feedback frame (306),
a second state indicative of the respective beamformee being incapable of encrypting a respective non-TB sounding feedback frame and being capable of encrypting a respective TB sounding feedback frame, and
a third state indicative of the respective beamformee being capable of encrypting the respective non-TB sounding feedback and the respective TB sounding feedback.

10. The method of claim 8, wherein each of the respective encryption capability indicators comprise:
a first state indicative of the respective beamformee being incapable of encrypting the feedback frame (306), and
a second state indicative of the respective beamformee being capable of encrypting the feedback frame (306).

11. The method of claim 8, wherein each of the respective encryption capability indicators may comprise:
a first state indicative of the respective beamformee being incapable of encrypting the feedback frame (306),
a second state indicative of the respective beamformee being capable of encrypting up to a 996-tone resource unit, RU,
a third state indicative of the respective beamformee being capable of encrypting up to a 2x996-tone RU, and
a fourth state indicative of the respective beamformee being capable of encrypting up to a 4x996-tone RU.

12. The method of any one of claims 8 to 11, wherein each of the respective feedback frames (306) may include a respective compressed beamforming channel quality indicator, CQI.

13. The method of any one of claims 8 to 12, further comprising:
receiving, by each beamformee from the beamformer (104) a sounding frame, in response to receiving the announcement frame (302),
wherein the respective beamformee and the beamformer (104) are communicatively coupled over an extremely high throughput, EHT, Wi-Fi signal, and the encryption capability indicator is an EHT physical layer, PHY, capabilities indicator.
